Europäisches Patentamt

(19) European Patent Office

Office européen des brevets

(11) Publication number: **0 252 075**
**B1**

(12) **EUROPEAN PATENT SPECIFICATION**

(45) Date of publication of patent specification: **23.05.90**

(21) Application number: **86900640.3**

(22) Date of filing: **07.01.86**

(86) International application number:
**PCT/NO86/00003**

(87) International publication number:
**WO 87/04256 16.07.87 Gazette 87/15**

(51) Int. Cl.⁵: **G 01 S 13/89, G 01 S 15/89**

(54) **SYSTEM FOR DETECTION OF OBJECTS WITH GIVEN, KNOWN CHARACTERISTICS AGAINST A BACKGROUND.**

(43) Date of publication of application:
**13.01.88 Bulletin 88/02**

(45) Publication of the grant of the patent:
**23.05.90 Bulletin 90/21**

(84) Designated Contracting States:
**AT BE CH DE FR GB IT LI LU NL SE**

(56) References cited:
**EP-A-0 100 141**
**EP-A-0 107 552**
**US-A-3 490 018**
**US-A-4 403 314**
**US-A-4 458 342**

(73) Proprietor: **NORGES TEKNISK-
NATURVITENSKAPELIGE FORSKNINGSRAD
Sognsveien 72
N-Oslo 8 (NO)**

(72) Inventor: **GJESSING, Dag, Kare, Trygveson
Skogfaret 54
N-2020 Skedsmokorset (NO)**
Inventor: **HJELMSTAD, Jens, Fredrik
N.2635
Tretten (NO)**

(74) Representative: **Hitchcock, Esmond Antony
et al
Lloyd Wise, Tregear & Co. Norman House
105-109 Strand
London WC2R 0AE (GB)**

Courier Press, Leamington Spa, England.

**Description**

This invention relates to the detection of objects with given, known characteristics against a background. The problems associated with the detection and identification of for example vessels against the sea surface has interest in this connection. Primarily the invention has been developed for radar systems and the employment of electromagnetic waves, but obviously it may also be applied in sonar and the like which is based upon acoustic waves.

In radar systems which include powerful data processing equipment the invention can give a monitoring capability which has been quite impossible hitherto, by employing corresponding optimal radar structures and signal processing algorithms.

It is known in radar systems to transmit coherent electromagnetic waves having characteristics adapted to the object or objects, background wave pattern or other wave patterns to be brought forth, or possibly suppressed in the detection. Such adaption may be designated transmitter generated filter functions. The use of filter functions at the transmitter side involves that after an adapted detection at the receiver side there is obtained a decision as to whether an object corresponding to the filter function concerned, is present. The shape of the object in the space domain as well as its movements in the time domain are independent parameter sets which may be analysed. A hologram-like interference pattern of a wave or vessel structure or both is put on the sea surface by an outgoing wave and a reflective wave interfering and forming standing waves. Then the hologram or interference pattern can be swept so as to investigate which specific propagation directions or orientations in space are present. Because there exist relationships between for example the movement of vessels and associated water waves induced on and in the water, a wave hologram and a vessel hologram can be established on the sea surface simultaneously in order to enhance the detection process.

It is clear that what is an "object" and what is "background", is purely a question of definition. Thus, for example the object of interest may possibly be a "naturally" occurring water wave pattern, whereas vessels and accompanying wave patterns on the water surface may be regarded as an interfering background or noise, which the detection process attempts to suppress.

For a closer description of the more advanced radar systems of the recent time, being of interest in connection with the above and forming the background of this invention, reference may be made to the following:

1. Gjessing, D. T., 1977, "A Generalized Method for Environmental Surveillance by Remote Sensing", Radio Science, Vol. 13, No. 2.

2. Gjessing, D. T., 1978, "Remote Surveillance by Electromagnetic Waves for Air-Water-Land", Ann Arbor Publishers Inc., Ann Arbor, USA.

3. Gjessing, D. T., 1981a, "Adaptive Radar in Remote Sensing", Ann Arbor Publishers Inc., Ann Arbor, USA.

4. Gjessing, D. T., 1981b, "Adaptive Techniques for Radar Detection and Identification of Objects in an Ocean Environment", IEEE Journal of Ocean Engineering, OE-6.1, 5—17.

5. Gjessing, D. T., 1979, "Environmental Remote Sensing. Part I: Methods Based on Scattering and Diffraction of Radio Waves", Phys. Technol., Vol. 10.

6. Gjessing, D. T., Hjelmstad, J., Lund, T., 1982, "A Multifrequency Adaptive Radar for Detection and Identification of Objects. Results on Preliminary Experiments on Aircraft against a Sea Clutter Background", IEEE Transactions on Antennas and Propagation, AP-30, 3, 351—365.

7. Gjessing, D. T., Hjelmstad, J., 1982, "Adaptive Radar in Remote Sensing Space, Frequency and Polarization Processes", Proc. IEE Radar 82, London, October 1982.

8. Gjessing, D. T., Hjelmstad, J., Lund, T., 1983, "Directional Ocean Spectra as Observed with a Multi-Frequency CW Doppler Radar System", Int. J. Remote Sensing 1984, 5, 2.

9. Bass, F. B., Fuks, I. M., 1979, "Wave Scattering from Statistically Rough Surfaces", Pergamon, New York.

10. Dysthe, K., 1980, "Havbolger og fysikk", Fra Fysikkens Verden.

Some of the above papers are reproduced in a thesis by Jens Hjelmstad, published by the University of Trondheim in 1986 and entitled "Adaptive Methods in Radar And Communication".

Systems of the type to which the invention relates, for the detection of objects against a background by means of electromagnetic or acoustic waves, provide for enhancement of the object response and/or suppression of the background response, in which the objects have predetermined first characteristics and/or the background has predetermined second characteristics. Such systems comprise means for transmitting one of electromagnetic and acoustic waves having characteristic signatures adapted for said predetermined first and/or second characteristics and being composed of a number of frequency components; and means for receiving backscattered waves resulting from said transmitted waves and for coherent demodulation using signal adaptive filters and comprising at least two homodyne detectors. The transmitter means and receiver means comprise separate transmitting and receiving transducer apertures, at least one of the transmitter means and the receiver means comprise at least two transducer apertures for coherent transmission or reception of the waves, and a distance between said at least two apertures is larger than one wavelength of the transmitted waves. According to the invention, signals derived from the received backscattered waves by said demodulation and filtering, and related to at least two simultaneously transmitted frequency components and at least two apertures respectively, are multiplied by complex multiplication, and a signal detected by one of said at least two homodyne detectors at one component frequency and at one of said at least two apertures, is subjected to said complex multiplication with another signal detected by another of said at least two homodyne detectors at another of said at least two apertures separated from said one aperture by at least one wavelength of said waves. Such complex multiplication provides a product which constitutes a matched filter for a given object or background, having said predetermined first or second characteristics, respectively.

In the typical case of an airborne radar system the invention — shortly expressed — is based upon the employment of antennas being separated in space in order to structure the hologram (the interference pattern) in the flight direction of the aircraft. This presumes that the main beam direction of the antennas is transverse to the flight direction and the antennas have independent modulation. In a corresponding manner acoustic transducers will be provided in acoustic systems, for example sonar systems. Also systems operating within the optical part of the electromagnetic frequency range are possible within the scope of this invention.

Systems of the kind contemplated here comprise receiver means for receiving backscattered electromagnetic or acoustic waves respectively, and for coherent demodulation employing signal adapted filters, as indicated above. This signal processing at the receiver side may be designated receiver generated filter functions which on the basis of an assumed or given transmitter function, performs corresponding signal operations so as to obtain resolution in space and time resolution in the processing domain in which a maximum of contrast between object (target) and background is obtained.

On the above basis this invention provides a fundamental solution which opens up many new and different possibilities and applications. Aircraft radar systems have been mentioned as an example above, but it will be realised that a system according to the invention may be employed on various types of carrying platforms, and not only on aircraft. Here both stationary as well as movable platforms may be contemplated. The two or more apertures may be located at one and the same platform or they may be arranged each on a separate platform which is mechanically independent of the one or more other platforms.

As will appear from the following there are other possible modifications of the system, within the scope of the invention, including the feeding of the apertures with the same or different frequencies, possibly time varying frequencies, and variation in the mutual positions and orientations respectively, of the apertures.

Some embodiments of the invention will now be described by way of example only, and with reference to the drawings, in which:

Figure 1 shows a simplified block diagram of a radar system utilizing the principles according to this invention,

Figure 2 illustrates receiver generated filter functions which may be involved in the system of Figure 1,

Figure 3A shows a particular embodiment according to the invention,

Figure 3B shows a diagram related to the embodiment of Figure 3A,

Figure 4 illustrates the geometry of the scattering process in wave number filtering along the aircraft axis (direction of movement of the platform),

Figure 5A and 5B illustrates a system equivalent to that of Figure 4 and the generation of an interferogram (interference pattern) when employing multifrequency waves, for illustrating specific functions,

Figure 6 shows in a diagram the so-called K-space-signature of a sea-surface and a ship respectively.

Figure 7 is a diagram showing a Doppler shift as a function of the frequency separation between multifrequency components used in a radar system,

Figure 8 illustrates schematically an advantageous Doppler signal treatment in the system according to the invention,

Figure 9 shows a further particular embodiment according to the invention.

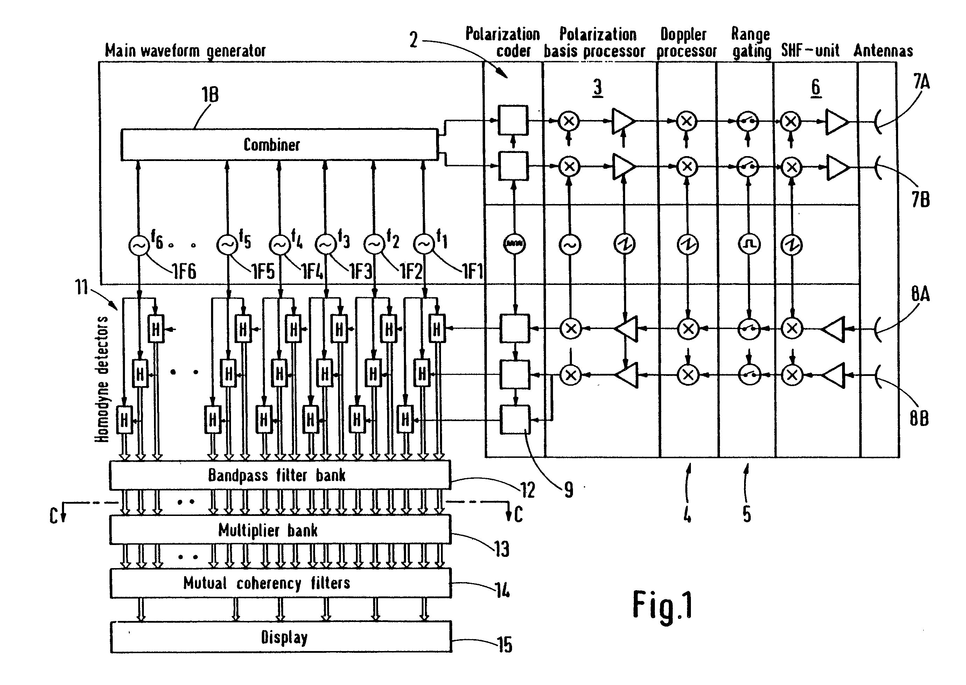

Figure 1 is a simplified block diagram for illustrating a complete radar system in which the principles according to the present invention are employed. The radar of Figure 1 is structured in blocks which are all controlled by a computer (not shown). For the various tasks or functions to be attended to by the radar system during operation, for example searching, tracking, identification, the filters or signal processing blocks of the radar will be configured correspondingly and for the purpose of obtaining an optimal result. The filter or signal processing functions involved may be implemented to a substantial degree in the form of software for the computer. Algorithms for reconfiguring the radar system for the different tasks may also suitably be a part of this software. Line C—C in the figure indicates at which level it may be normally assumed that the software part (below the line) starts in relation to more or less conventional electronic circuits (above line C—C) being included in the system. It is obvious however, that this dividing line is not fixed and may be displaced towards more hardwired electronics or towards a greater proportion of software and computer processing, depending upon available technology. In view of present technology computer processing may as a maximum take place starting with the band pass filtereing and proceeding downwards in Figure 1.

The transmitter part of the system in Figure 1 comprises in the first instance a group of frequency synthesizers 1F1—1F6 operating in the frequency band 50 to 90 MHz for the purpose of illuminating the object or area being of interest, with a suitable set of frequencies (waves). Thus in the example shown there are provided six frequency synthesizers 1F1—1F6 having selected mutual frequency spacings.

Among relevant transmitter generated filter functions in this system multi frequency illumination is mentioned first, i.e. the simultaneous transmission of several coherent waves or frequency components. For example by illuminating a seasurface from one or more transmitter apertures with a signal being composed of a number of frequency components, the combining of these at the receiver side will result in the generation of a number of standing waves against the sea-surface. The period of these waves is inversely proportional to the frequency spacing between the frequency components. Several of the references mentioned above discuss more closely such transmitter generated filter functions, for example reference (6), page 356 and Figure 4.

The transmitter frequencies mentioned constitute a coherent line spectrum of transmitted waves, which after having been combined in a combiner 1B, possibly may be given a polarization in a polarization coder 2 and a polarization basis processor 3. Then follows a Doppler processor 4 and a range-gating unit 5 before the signals proceed to a SHF-unit 6 which transposes the signals to a suitable microwave frequency. The purpose of the polarization processor 3 is to establish a plurality of channels for independent measurements of all elements in the backscattering matrix. The Doppler processor 4 performs a precompensation for the velocity of the object or target. The units or function blocks 2, 3 and 4 as mentioned here are not necessary for the solution principle according to the invention, but may make possible particular and advantageous functions in association therewith. It will be understood that corresponding functions may also be included at the receiver side, as shown in Figure 1.

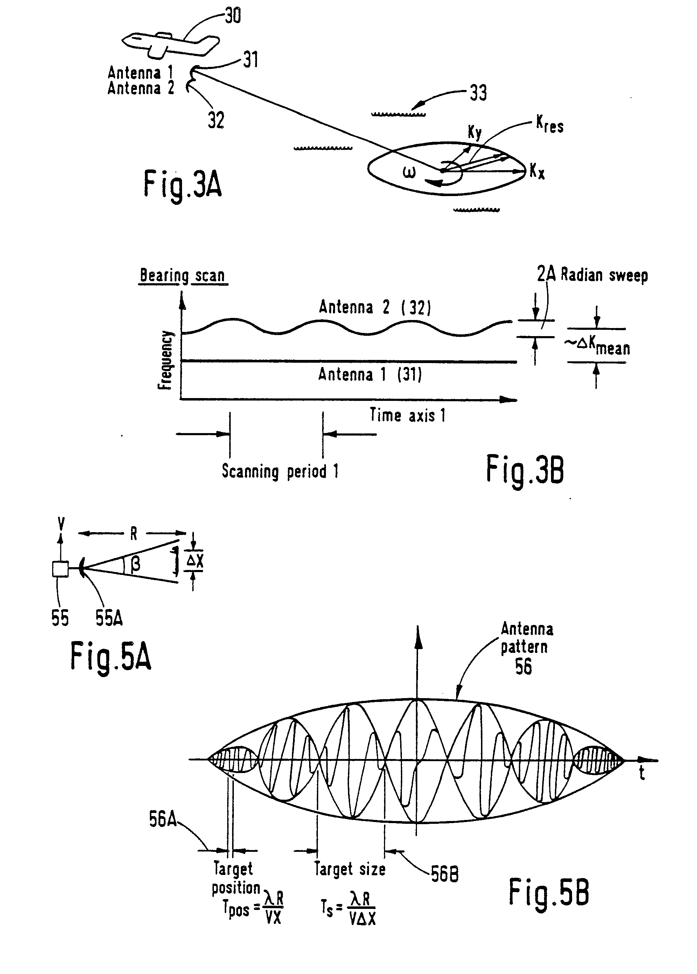

The example of Figure 1 thus shows a structure having two transmitter channels which from the combiner 1B leads to two separate antennas or apertures 7A and 7B, the feeding of which gives a coherent transmission of electromagnetic waves. The mutual distance between the antennas 7A and 7B must be larger than one wave length of the waves transmitted. This will be explained more closely below with reference to Figures 3A and 3B.

Although Figure 1 is a schematic and simplified drawing it will be realized that the antennas 7A and 7B emit directional radiation with parallel main beam directions for both antennas. In an advantageous embodiment these are moreover located in one and the same plane normal to the main beam direction.

At the receiver side there are provided two antennas 8A and 8B with a mutual arrangement which may be quite similar to what is described with respect to the transmitter antennas. In two corresponding and separate receiver channels there may possibly be included functional blocks having functions being complementary to the blocks 2, 3 and 4 at the transmitter side. The polarization coder in the receiver part in addition to the two receiver channels from the respective antennas 8A and 8B, comprises a specific unit 9 which is necessary in order that the detection shall provide a complete measurement of polarization scatter values, which has no direct interest to the main idea according to the invention. The receiver part further comprises a number of homodyne detectors 11 which in a way known per se provides for the necessary detection. From the detectors there is delivered to a band pass filter bank 12 a number of signals corresponding to the six transmitted frequency components. Since the detection involves both amplitude and phase, the number of signals delivered by the band pass filters will be twelve.

The band pass filter function represented by block 12 in Figure 1 as known and conventional is adapted to provide a narrow-band sensitivity within the respective frequency bands, so as to eliminate interference and noise. The following blocks 13 and 14 comprise more specific functions, namely a multiplication in 13 and a coherency filter function in 14. These will be explained more closely below.

As the last (lowermost) functional block in Figure 1 there is shown a display block 15. This serves to present the final product of the processing to the outside world, usually represented by an operator. In addition to or as an alternative to representation to an operator, the block 15 may of course comprise automatic alarm functions or control functions activated for example upon the detection and identification of a certain object.

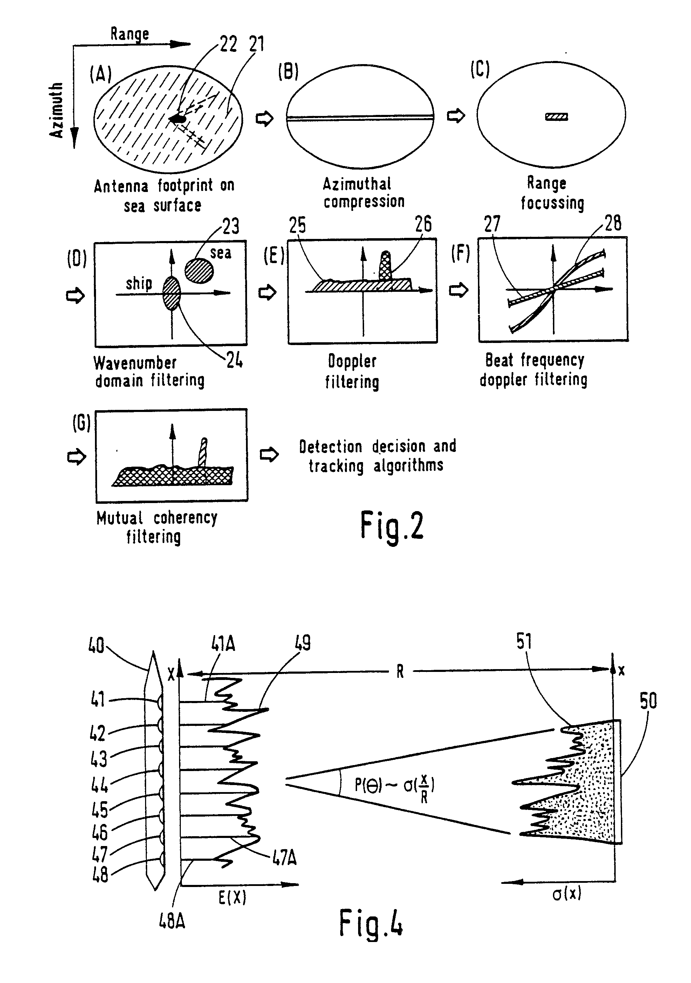

Picture (frames) A—G in Figure 2 illustrate functions which are included in or may be incorporated into the system of Figure 1. Thus Figure 2A shows a practical example of an application of a radar system, namely towards a seasurface having water waves 21 as indicated and with a vessel 22 in movement. The oval picture section shown may be regarded as the "scene" which is illuminated by the directional transmission of electromagnetic waves from a platform, for example an aircraft.

In Figures 2B and 2C there are illustrated an azimuthal compression and range gating or focusing functions respectively, not being directly related to the present invention, but indicating that the principles according to the invention may also be used in connection with conventional SAR-processing (SAR: Synthetic Aperture Radar) and for special additional functions, such as range focusing. There is here the question of receiver generated filter functions being mainly based upon wave number filtering in order to obtain an enhanced spacial resolution.

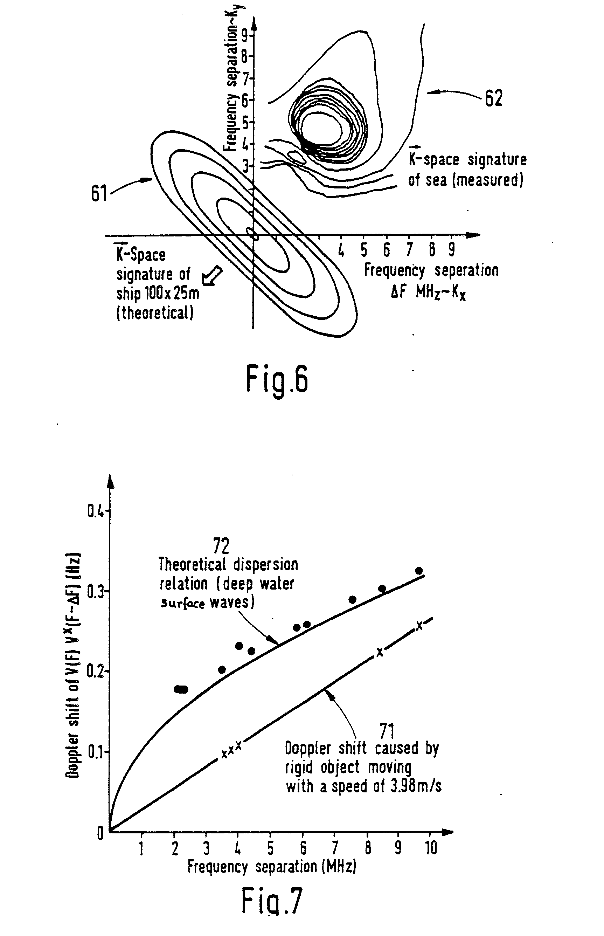

Functions as illustrated by frame pictures 2D, 2E and 2F in the figure are related to wave number Doppler-filtering for establishing wave number spectra and associated Doppler-spectra. More specifically Figure 2D shows in the principle a diagram of the so-called K-space signature for sea 23 and ship 24, which shall be explained more closely below with reference to Figure 6. This form of presentation (in the K-space) is described in references (6), (7) and (8).

The multiplier block 13 in Figure 1 in analogue circuit technology and/or in a programmed computer attends to, inter alia, the wave number filtering which gives a presentation as in Figure 2D.

By illuminating the sea surface from a transmitter aperture with a signal being composed of a number of frequency components, and by combining these at the receiver side there will be generated a number of standing waves against the sea surface with a period being inversely proportional to the frequency separation (distance) between the frequency components.

When the frequency separation between two frequency components is $\Delta F$ there will be a modulation in space with period $c/2\Delta F$. By transmitting a number of frequency components equal to n having differing mutual frequency separations, there is obtained by combination a number of $n(n-1)/2$ different modulation periods (wave number).

The transmitted signal s(t) will then be written as a sum of frequency components.

$$s(t) = \sum_{f_i}^{f_n} \exp(j2\pi f_i t) \cdot w(t)$$

in which

w(t) = a suitable window function in the time domain in which space selective analysis of wave numbers is desired.

The above number $n(n-1)/2$ appears at the receiver side as a number of signals from block 13. Employing for example six transmitted frequency components this number of signals being processed is equal to 15.

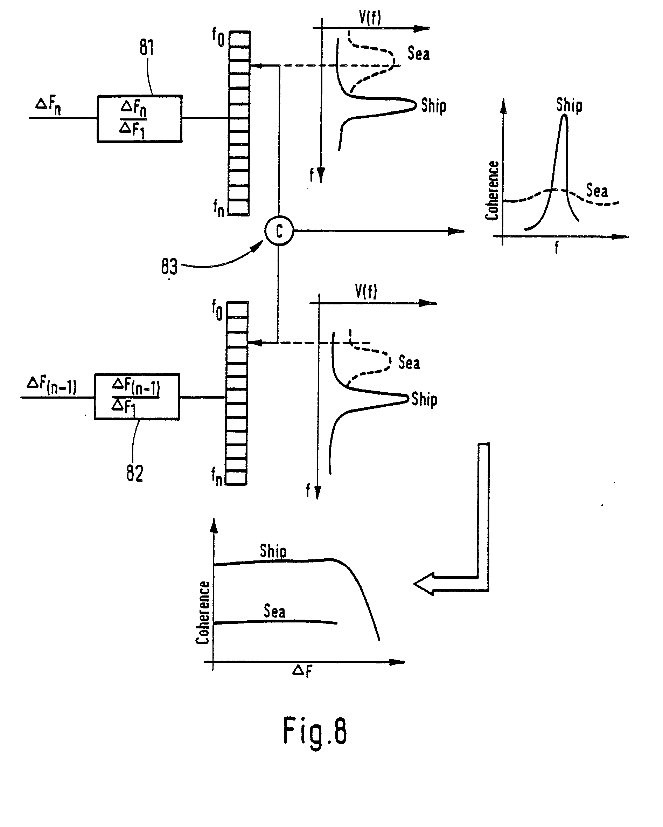

Figure 2E, 2F and 2G relate to possible and desirable additional operations after the actual detection, namely Doppler-filtering (Figure 2E) in which the ship is brought forth at 26 in relation to the sea 25, and beatfrequency-Doppler-filtering (Figure 2F) in which the curve 27 (approximately rectilinear) is associated with the ship, whereas curve 28 relates to the sea. This latter form of diagram shall be explained more closely below with reference to Figure 7. Finally Figure 2G is concerned with the formation of mutual space/time coherency spectra by means of specific filter functions being represented by block 14 in Figure 1. See also explanations below with reference to Figure 8.

When applying filter functions which in a simplified and fundamental manner are illustrated in Figure 2, the various characteristics of objects such as ships, induced waves and background waves, will be utilized for enhancing the detection capability of a radar system, possibly a sonar system or the like.

For the fundamental solution according to the invention there is a concept of substantial significance, which may be designated transverse space variable multi frequency illumination, i.e. the transmission of electromagnetic or acoustic waves towards a scene comprising an object and/or a background. In the example of airborne radar and by employing several antenna apertures along the flight direction of the aircraft, wave numbers may be assigned a component in the flight direction which may be utilized for generating periodicities having a random orientation in relation to the flight direction of the aircraft and to the pointing direction of the antennas.

By using a signal form

$$s_1(t) = \sum_{f_i}^{f_n} \exp(j2\pi f_i t) \cdot \omega(t)$$

in aperture 1 and a signal form

$$s_2(t) = \sum_{f_i}^{f_n} \exp(j2\pi(f_i + \delta\, f(t)t)\, \omega(t)$$

in aperture 2 separated by a distance x there is obtained a sweep of the wave number vector as illustrated in Figure 3A. The above apertures 1 and 2 are represented in this figure by the two antennas 31 and 32 schematically indicated as belonging to an aircraft 30. The antennas illuminate an area of a seasurface 33 with an interference pattern which can vary with time, as will appear from the above mathematical expressions regarding signal forms $s_1(t)$ and $s_2(t)$.

The resulting spacial wave number vector $K_{res}$ may be given a rotation ($\omega$) in the horizontal plane by letting the transmitted signal at one of the antenna apertures 31, 32 have a differential frequency displacement (see the term $\delta(t)$ in the expression for $s_2(t)$). This may vary with time. Moreover it will be understood that a randomly chosen phase difference betwen the apertures may be employed.

Considering that the resulting hologram or interference pattern which the antennas 31 and 32 establish in common, can have desired or predetermined particular configurations which may deviate very significantly from what is established by the antennas individually, it will be necessary to locate the antennas at a mutual distance (x) which is larger than one wavelength of the frequencies employed.

Similar to Figure 1 there is shown in Figure 3A a location of the antennas 31 and 32 side by side in the same plane with parallel main beam directions in the same sense.

For a closer explanation of the operation according to Figure 3A, there is shown in Figure 3B how the frequencies being applied to the respective antennas 31 and 32 vary with time. While antenna 31 has a constant frequency, the antenna 32 has a periodic time variation as a sine curve. The period is

$$\frac{2\pi}{\omega},$$

wherein $\omega$ is the rotational velocity of the vector $K_{res}$ in Figure 3A.

From the preceeding discussion of Figures 3A and 3B it appears that the system may operate with the same frequencies or with different frequencies and possibly with time varying frequencies at the two apertures. The choice of frequency variation and combination will depend upon which objects and/or backgrounds are of significance in a given practical use.

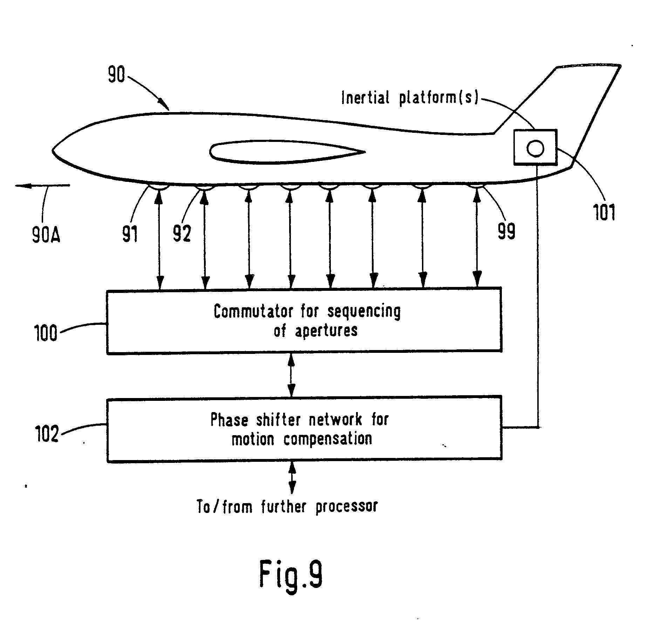

It will also be understood that the apertures must not necessarily lie in one and the same plane normally to the main beam direction or directions. The apertures may be arranged with a mutual displacement in the beam direction and in that way form interference patterns corresponding to that object or those objects which are to be detected, possibly to a background which shall be suppressed or emphasized. See Figure 9.

The geometry of the scattering process in wave number filtering along the aircraft axis is illustrated in Figure 4. This shows a platform 40 provided with a number of transversely arranged apertures 41—48 which illuminate an object 50 the reflection co-efficient of which varies according to curve 51 for the waves employed. Upon backscattering from the object there will appear at the receiver side a resulting field strength distribution as shown with curve 49. The apertures 41—49 or corresponding receiver apertures will then sense respective field strength values as shown at 41A—48A.

The angular spectrum $\vec{E}_s(\vec{K})$ of backscattered field strength 49 from the structure represented by the object 50, is the Fourier-transform of spacial field strength E(K) as seen in Figure 4.

$$E(\vec{K}) \sim \int E(\vec{x}) \, e^{-j\vec{K}\vec{x}} d\vec{x}$$

in the same way the angular power spectrum P($\theta$) will be

$$P(\theta) = E(\vec{K}) \, E^*(\vec{K}) \sim \int R_E(\vec{r}) \, e^{-j\vec{K}\vec{r}} \, dr$$

in which
$R_E(\vec{r})$ = the autocorrelation function of the field strength interferogram $E(\vec{x})$ and $\vec{r}$ is an increment of $\vec{x}$. Since

$$|\vec{K}| = \frac{4\pi}{\lambda}\sin\theta/2$$

and

$$\vec{r} = \vec{V}\,\psi$$

whereby
$\lambda$ = the microwave wavelength
$\vec{V}$ = the aircraft velocity (when the platform is an aircraft)
$\psi$ = time increment
$K = \omega/c$
one has

$$P(\theta) = \int R_E(V_\psi) \, e^{-j\omega\psi} \frac{V}{c} \, d(V\psi)$$

which means

$$P(\theta) \sim W(f) \sim \sigma\left(\frac{\psi}{R}\right)$$

This means that by taking the power spectrum of the interferogram (interference pattern, "hologram") through which the platform (aircraft) 40 moves, there is obtained a direct expression for the transverse distribution of scattering elements in the object structure 50.

The above references (1) and (2) treat the basic principles for what is discussed immediately above in connection with Figure 4.

Another and equivalent presentation which explains the same as Figure 4, but from a different point of view is shown in Figures 5A and 5B. The situation according to Figure 5A corresponds in the principle to the one in Figure 4 in that a platform 55 with antenna 55A is moving at a velocity v, whereas an object represented by two points at a mutual distance $\Delta x$ located at a distance R from the platform 55, is illuminated by the antenna 55A thereof. Between the antenna and the object there will be an interferogram as shown in Figure 5B, wherein curve 56 indicates the antenna pattern (interferogram) as a whole, whereas for example sections 56A and 56B show the position and the size respectively of the object, obtained as a result of the previously described multi frequency illumination.

By putting together wave number information provided according to Figures 4 and 5 it will be possible to improve the detection in a radar system, for example for discriminating between vessels and waves. The presentation then takes place by means of a diagram as shown in Figure 2D and generally discussed above. A more detailed example of such a diagram is shown Figure 6. Along both coordinates in the diagram there is a frequency separation scale and there is plotted a K-space signature for a ship at 61 and for the sea at 62 respectively. The signature 61 as shown has been calculated theoretically, whereas the sea signature 62 has been measured.

Wave number plotting in a diagram as in Figure 6 thus generally can be used for representing a scene including objects/background by establishing a harmonic hologram (interferogram, interference pattern) as explained previously. Quite generally by using complicated hologram patterns with respect to time variation, frequency components and aperture arrangement as mentioned above, it is moreover possible to adapt the system for scenes (objects and backgrounds) of the most differing types, but still describe the response in a diagram of the kind shown in Figure 6 (and Figure 2D). All the previously discussed filter functions may be of interest in this connection. On the basis of what is described here with reference to Figures 4, 5 and 6, the signal processing at the receiver side by wave number filtering may in other words give a registration of the response of a number of simultaneous interference patterns formed by transmitting waves towards an object, and determination of the degree of correspondence between the interference patterns and the object to be detected.

Figure 7 is a diagram obtained by subjecting a point sample from Figure 6 to a time analysis by Doppler-processing (see Figure 1 and 2). Such processing and presentation is explained in the above references (6), (7) and (8). The diagram of Figure 7 shows Doppler-shift as a function of frequency separation and two curves relating respectively to a rigid object in movement (curve 71) and to water surface waves on water (curve 72). The latter curve is based upon the theoretical dispersion relation for water surface waves on deep water.

As it appears from curves 71 and 72 in Figure 7 the wave number Doppler-spectra for a vessel (rigid object) and a seasurface with waves, can only have a co-incident maximum spectral maximum for one value of the frequency separation $\Delta F$. For other values of $\Delta F$ therefore this form of filter function will result in a further enhanced contrast between sea and vessel, over and beyond that which is obtained with the remaining filter functions described.

This Doppler-filtering of the wave number spectrum with a calculation of the Doppler-spectrum of the non-averaged · autocorrelation function $R(\Delta F)$ gives information as to how different structures which resonate with the frequency separation concerned, are moving. The Doppler-spectrum is calculated as

$$P_{\Delta F}(f) = \int_T E_{f_i}(t)\, E_{f_j}{}^*(t)\, \exp(j2\pi ft),\ f_i{-}f_j = \Delta F$$

Accordingly such Doppler-processing makes possible the determination of the movements of the object with respect to the interference pattern (hologram, inter-ferogram) established.

More specifically the Doppler-curve 72 for the sea follows an inverse square law, whereas the vessel curve 71 is linear with an angular coefficient which is proportional to the radial velocity of the vessel (in relation to the observation platform). The one possible coinciding value mentioned, is given by an intersection point between curves 71 and 72, lying at the right outside the diagram of Figure 7.

As the last functional block in front of the display block 15 in Figure 1 there is shown a particular filter function designated mutual coherency, i.e. by filtering wave number series. This is implemented for example as illustrated in Figure 8. Also here there is taken as an interesting use a rigid object, such as a vessel against a background in the form of the sea surface.

After deconvolution and normalization processes the time axis of the autocorrelation functions $R(\Delta F,t)$ is stretched (at 81 and 82 respectively) so that the differences in $\Delta F$ are eliminated. This is effected by stretching the time axis with a factor $\Delta F_r/\Delta F_i$, whereby $\Delta F_i$ is the frequency difference of the R-function and $\Delta F_n$ is the reference frequency difference.

Then each of the frequency components in the normalized functions $R(\Delta F_i,t)$ and $R(\Delta F_n,t)$ are correlated (at 83). Because the sea surface is dispersive and compressible it will not give any correlation, whereas in contrast rigid objects such as vessels will give a significant correlation.

Instead of being with respect to the time access the stretching described can in like manner be applied to the frequency axis. At this point the invention generally implies that the received and processed, complex Doppler-signal components resulting from the multi frequency waves transmitted, are treated in pairs by stretching of the time axis or the frequency axis of the highest frequency component in each pair and/or compressing of the time axis or the frequency axis for the lowest frequency component in the pair, in order to bring these components to the same frequency. This stretching and/or compressing is carried out with a factor being dependent upon what is to be detected. After this pair processing the two signal components are correlated so that there is obtained an improved detection of objects.

In the case of detection of underwater objects in movement generating internal waves in a water mass with consequent modification of a surface wave pattern on the water, the above stretching and/or compressing of the time axis or the frequency axis is carried out with a factor given by the dispersion relation for internal waves at the density profile concerned in the water mass.

The presently discussed mutual-coherency-function obtained by correlating normalized Doppler-

EP 0 252 075 B1

spectra from one difference-frequency-pair with another, makes it possible to obtain an indication of the rigidity of the object or the structure being of interest.

When installing a system according to the invention on a platform intended for movement, for example an aircraft, a satellite or a ship, this platform can advantageously and in a manner known per se, be provided with an inertial reference device for stabilizing the antenna or the antennas (apertures) being included in the system. It will be realized that in the case of movable platforms, in particular when the two or more co-operating apertures which shall have a determined spacing, are divided between several such platforms, special precautions must be taken in order to compensate for possible mutual movements. Advantageously this can be obtained by means of a compensation device based upon phase shift of signals involved, for establishing a local and time limited stationary interference pattern of the waves. Such a solution will make possible, inter alia, particular arrangements in which at least two apertures are located each on a separate platform which is mechanically independent of each other, for example two airplanes.

For a closer explanation of the possibilities just mentioned, reference is made to Figure 9. This shows an aircraft 90 provided with a number of antennas 91—99 the main beam direction 90A of which may be parallel to the longitudinal axis of the aircraft. With the location schematically shown the antennas have a mutual displacement in the main beam direction. Normally only a smaller number of these antennas 91—99, in particular the pairs thereof, will be used for simultaneous, coherent transmission and reception respectively. By means of a commutator 100 there may be effected an electronic switching between the antennas, so that among other things there can be obtained a time variation of the mutual distance between those antennas being activated at any given time. Moreover in Figure 9 there is shown schematically an inertial reference device 101 which through a compensation device 102 based upon phase shift of the antenna signals, makes it possible to establish a desired interference pattern, in particular a local and time limited stationary interference pattern.

Finally experts in the field will understand that in such systems there is in principle a complete reciprocity between the transmitter side and the receiver side. In substance therefore, features which have been discussed in the above description with reference to either the transmitter side or to the receiver side, will apply correspondingly to the other or complementary side, i.e. the receiver side and the transmitter side respectively.

## Claims

1. A system for the detection of objects against a background by means of electromagnetic or acoustic waves, which provides for enhancement of the object response and/or suppression of the background response, such objects having predetermined second characteristics and/or said background having predetermined second characteristics, the system comprising means (1F1—1F6, 1B, 2—6 7A, 7B) for transmitting one of electromagnetic and acoustic waves having characteristic signatures adapted for said predetermined first and/or second characteristics and being composed of a number of frequency components; and means (8A, 8B, 11) for receiving backscattered waves resulting from said transmitted waves and for coherent demodulation using signal adaptive filters and comprising at least two homodyne detectors (11), the transmitter means and receiver means comprising separate transmitting and receiving transducer apertures, wherein at least one of the transmitter means and the receiver means comprise at least two transducer apertures (7A, 7B, 8A, 8B, 31—32, 41—48, 91—99) for coherent transmission or reception of the waves, and therein a distance between said at least two apertures is larger than one wavelength of the transmitted waves, characterised in that signals derived from the received backscattered waves by said demodulation and filtering, and related to at least two simultaneously transmitted frequency components and at least two apertures respectively, and multiplied by complex multiplication (13), wherein a signal detected by one of said at least two homodyne detectors at one component frequency and at one of said at least two apertures, is subjected to said complex multiplication with another signal detected by another of said at least two homodyne detectors at another simultaneously transmitted frequency component at another of said at least two apertures separated from said one aperture by at least one wavelength of said waves, said complex multiplication providing a product which constitutes a matched filter for a given object or background, having said predetermined first or second characteristics, respectively.

2. A system according to Claim 1, characterised in that said at least two apertures are adapted to transmit or receive frequency components being the same at each of said at least two apertures.

3. A system according to Claim 1, characterised in that said at least two apertures are adapted to transmit or receive frequency components being different at each of said at least two apertures.

4. A system according to Claim 2 or Claim 3, characterised in that provision is made for a randomly chosen phase difference in said frequency components between said at least two apertures.

5. A system according to any preceding Claim, characterised in that said frequency components are adapted to be varied as a function of time.

6. A system according to any preceding claim, characterised in that each of the apertures (31, 32) is adapted for directional radiation with a main beam direction, the main beam directions of the apertures (31, 32) being mutually parallel and directed in the same sense, and the apertures (91—99) being located with a mutual displacement in the main beam direction (90A).

8

7. A system according to any preceding claim, characterised in that the mutual distance between the apertures (91—99) is adapted to be varied as a function of time.

8. A system according to Claim 7, characterised in that said variation is accomplished by electronic switching (100) between a number of aperturs (91—99).

9. A system according to any preceding claim, characterised in that at least two apertures are mounted each on a separate platform which is mechanically independent of other platforms.

10. A system according to any preceding claim, characterised in that at least one of the aperatures is mounted on a movable platform which platform (90) is provided with inertial reference means (101) for stabilising the aperture or apertures (91—99).

11. A system according to Claim 8 or Claim 9, characterised by compensating means (102) for the movement of the platform (90), based upon phase shift of signals, for establishing a local and time limited stationary interference pattern of waves.

12. A system according to any preceding claim, characterised in that said transmitted waves have a set number of characteristic signatures each adapted for a predetermined first characteristic of an individual object.

13. A system according to any preceding claim, characterised in that the signal processing in said receiver means comprises Doppler-processing (4) for determining the movements of an object in relation to the interference pattern formed (Figure 1, 7).

14. A system according to any preceding claim, characterised in that the signal adaptive filters are used in said receiver means for generating a Doppler-signal for each multifrequency component of the waves transmitted, that so generated Doppler-signals are normalised with respect to power in order to form a normalised, complex Doppler-signal for each multifrequency component, that these Doppler-signals components are processed in pairs by stretching (81, 82) of the time axis or the frequency axis for the highest frequency component in each pair and/or compressing of the time axis or the frequency axis for the lowest frequency component in the pair, for bringing these components to the same frequency, said stretching and/or compressing being effected with a factor which depends upon what is to be detected, and that the two signal components in each pair after said processing of pairs, are correlated (83).

15. A system according to Claim 14, for the detection of underwater objects in movement which generate internal waves in a water mass with resulting modification of a surface wave pattern on the water, characterised in that said stretching and/or compressing of the time axis or the frequency axis is effected with a factor given by the dispersion relation for internal waves at the density profile concerned in the water mass.

## Patentansprüche

1. System zur Detektion von Objekten vor einem Hintergrund mittels elektromagnetischer oder akustischer Wellen, das für eine Steigerung der Objektempfindlichkeit und/oder für eine Unterdrückung der Hintergrundempfindlichkeit sorgt, wobei die Objekte vorbestimmte erste Eigenschaften haben und/oder der Hintergrund vorbestimmte zweite Eigenschaften hat, wobei das System Mittel (1F1—1F6, 1B, 2—6, 7A, 7B) umfaßt zum Übertragen von elektromagnetischen oder akustischen Wellen mit charakteristischen Signaturen, die für die vorbestimmten ersten und/oder zweiten Eigenschaften angepaßt sind und aus einer Anzahl von Frequenzkomponenten zusammengesetzt sind; und mit Mitteln (8A, 8B, 11) zum Empfangen rückwärts gestreuter Wellen, die von den übertragenen Wellen resultieren, und zur kohärenten Demodulation unter Verwendung von signalanpassungsfähigen Filtern, mit zumindest zwei Homodyne-Detektoren (11), wobei die Übertragungsmittel und Empfangsmittel getrennte Übertragungs- und Empfangswandleraperturen aufweisen, wobei die Übertragungsmittel und/oder Empfängermittel zumindest je zwei Wandleraperturen (7A, 7B, 8A, 8B, 31—32, 41, 48, 91—99) zur kohärenten Übertragung oder Aufnahme der Wellen umfaßt, und wobei ein Abstand zwischen den zumindest zwei Aperturen größer ist als eine Wellenlänge der übertragenen Wellen, dadurch gekennzeichnet, daß Signale, die von den empfangenen rückwärts gestreuten Wellen durch die Demodulation und Filterung gewonnen werden und sich auf zumindest zwei simultan übertragene Frequenzkomponenten und zumindest zwei Aperturen beziehen, durch komplexe Multiplikation (13) multipliziert werden, wobei ein Signal, das durch einen der zumindest zwei Homodyne-Detektoren an einer Frequenzkomponente und an einer der zumindest zwei Aperturen detektiert wird, der komplexen Multiplikation mit einem anderen Signal, das durch einen anderen der zumindest zwei Homodyne-Detektoren an einer anderen simultan übertragenen Frequenzkomponente an einer anderen der zumindest zwei Aperturen, die durch zumindest eine Wellenlänge der Wellen von der einen Apertur getrennt ist, detektiert wird, unterzogen wird, wobei die komplexe Multiplikation ein Produkt liefert, das einen angepaßten Filter für einen bestimmten Gegenstand oder Hintergrund der die vorbestimmte erste bzw. zweite Eigenschaft hat, bildet.

2. System nach Anspruch 1, dadurch gekennzeichnet, daß die zumindest zwei Aperturen so ausgebildet sind, daß sie Frequenzkomponenten, die an beiden der zumindest zwei Aperturen gleich sind, übertragen oder empfangen.

3. System nach Anspruch 1, dadurch gekennzeichnet, daß die zumindest zwei Aperturen so ausgebildet sind, daß sie Frequenzkomponenten, die an beiden der zumindest zwei Aperturen unterschliedlich sind, übertragen oder empfangen.

4. System nach Anspruch 1 oder 2, dadurch gekennzeichnet, daß eine zufällig gewählte Phasendifferenz in den Frequenzkomponenten zwischen den zumindest zwei Aperturen vorgesehen ist.

5. System nach einem der vorstehenden Ansprüche, dadurch gekennzeichnet, daß die Frequenzkomponenten als Funktion der Zeit variiebar sind.

6. System nach einem der vorstehenden Ansprüche, dadurch gekennzeichnet, daß jede der Aperturen (31, 32) für eine Richtstrahlung mit einer Hauptstrahlrichtung ausgebildet ist, wobei die Hauptstrahlrichtungen der Aperturen (31, 32) zueinander parallel und gleichsinnig ausgerichtet sind, und die Aperturen (91—99) mit einer gegenseitigen Verschiebung in der Hauptstrahlrichtung (90A) angeordnet sind.

7. System nach einem der vorstehenden Ansprüche, dadurch gekennzeichnet, daß der gegenseitige Abstand zwischen den Aperturen (91—99) als Funktion der Zeit variierbar ist.

8. System nach Anspruch 7, dadurch gekennzeichnet, daß die Variation durch eine elektronische Schaltung (100) zwischen einer Anzahl von Aperturen (91—99) ausgeführt wird.

9. System nach einem der vorstehenden Ansprüche, dadurch gekennzeichnet, daß zumindest zwei Aperturen jeweils auf einer getrennten Plattform angebracht sind, die mechanisch unabhängig von anderen Plattformen ist.

10. System nach einem der vorstehenden Ansprüche, dadurch gekennzeichnet, daß zumindest eine der Aperturen auf einer beweglichen Plattform angebracht ist, wobei die Plattform (90) mit einem Trägheitsbezugsmittel (101) versehen ist, um die Apertur oder Aperturen (91—99) zu stabilisieren.

11. System nach Anspruch 8 oder 9, gekennzeichnet durch Ausgleichsmittel (102) für die Bewegung der Plattform (90), die auf der Phasenverschiebung der Signale basiert, zum Erstellen eines örtlichen und zeitlich begrenzten stationären Interferenzbildes der Wellen.

12. System nach einem der vorstehenden Ansprüche, dadurch gekennzeichnet, daß die übertragenen Wellen eine festgelegte Anzahl von charakteristischen Signaturen haben, die jeweils für eine vorbestimmte erste Eigenschaft eines Einzelobjekts angepaßt sind.

13. System nach einem der vorstehenden Ansprüche, dadurch gekennzeichnet, daß die Signalverarbeitung in dem Empfängermittel eine Doppler-Verarbeitung (4) zum Bestimmen der Bewegungen eines Objekts in Bezug zum gebildeten Interferenzbild (Fig. 1, 7) umfaßt.

14. System nach einem der vorstehenden Ansprüche, dadurch gekennzeichnet, daß die signalanpassungsfähigen Filter in den Empfängermitteln zum Erzeugen eines Doppler-Signals für jede Mehrfrequenzkomponente der übertragenen Wellen verwendet werden, daß die so erzeugten Doppler-Signale bezüglich der Stärke nomiert werden, um ein normiertes, komplexes Doppler-Signal für jede Multifrequenzkomponente zu erzeugen, daß diese Doppler-Signalkomponenten paarweise verarbeitet werden durch Strecken (81, 82) der Zeitachse oder der Frequenzachse für die höchste Frequenzkomponente in jedem Paar und/oder zum Stauchen der Zeitachse oder der Frequenzachse für die niedrigste Frequenzkomponente in dem Paar, um diese Komponenten auf die gleiche Frequenz zu bringen, wobei das Strecken und/oder Stauchen mit einem Faktor bewirkt wird, der davon abhängt, was detektiert werden soll, und daß die zwei Signalkomponenten in jedem Paar, nach dem Verarbeiten der Paare, korreliert werden (83).

15. System nach Anspruch 14 zur Detektion von Unterwasserobjekten in Bewegung, die innere Wellen in einem Wassermedium erzeugen, mit einer resultierenden Modifikation eines Oberflächen-Wellenmusters auf dem Wasser, dadurch gekennzeichnet, daß das Strecken und/oder Stauchen der Zeitachse oder der Frequenzachse mit einem Faktor bewirkt wird, der durch die Dispersionsrelation für inneren Wellen am Dichteprofil, das in dem Wassermedium vorliegt, gegeben ist.

**Revendications**

1. Un système destiné à la détection d'objets situés dans un arrière-plan au moyen d'ondes électromagnétiques ou acoustiques qui fournit une amélioration de la réponse d'objet et/ou une suppression de la réponse d'arrière-plan, de tels objets possédant des premières caractéristiques déterminées au préalable et/ou un arrière-plan possédant des deuxièmes caractéristiques déterminées au préalable, le système comprenant des moyens (1F1 à 1F6, 1B, 2 à 6, 7A, 7B) pour transmettre une onde électromagnétique ou acoustique possédant des signatures caractéristiques adaptées auxdites premières et/ou deuxièmes caractéristiques déterminées au préalable et étant composées de plusieurs composantes de fréquence; et des moyens (8A, 8B, 11) pour recevoir des ondes rétrodiffusées résultant desdites ondes transmises et pour démoduler de façon cohérente en utilisant des filtres adaptables aux signaux et comprenant au moins deux détecteurs homodynes (11), les moyens de transmission et les moyens de réception comprenant des ouvertures séparées de transducteurs de transmission et de réception, dans lesquels au moins l'un des moyens parmi les moyens de transmission et les moyens de réception comprend au moins deux ouvertures de transducteurs (7A, 7B, 8A, 8B, 31—32, 41 à 48, 91 à 99) en vue d'une transmission ou d'une réception cohérente des ondes, et dans lequel une distance entre lesdites au moins deux ouvertures est supérieure à une longueur d'onde des ondes transmises, caractérisé en ce que des signaux dérivés à partir des ondes rétrodiffusées reçues par ladite démodulation et ledit filtrage, et reliés à au moins deux composantes de fréquence transmises simultanément et à au moins deux ouvertures respectivement, sont multipliés par une multiplication complexe (13) dans laquelle un signal

EP 0 252 075 B1

détecté par l'un desdits au moins deux détecteurs homodynes à une fréquence de composante et à au moins une desdites deux ouvertures, est soumis à ladite multiplication complexe par un autre signal détecté par un autre desdits au moins deux détecteurs homodynes à une autre composante de fréquence transmise simultanément à une autre desdites au moins deux ouvertures séparées de ladite première ouverture par au moins une longueur d'onde desdites ondes, ladite multiplication complexe fournissant un produit qui constitue un filtre apparié pour un objet ou arrière-plan donné, présentant lesdites premières ou deuxièmes caractéristiques déterminées au préalable, respectivement.

2. Un système selon la revendication 1, caractérisé en ce que deux ouvertures au moins sont aptes à transmettre ou recevoir des composantes de fréquence qui sont les mêmes à chacune desdites au moins deux ouvertures.

3. Un système selon la revendication 1, caractérisé en ce que lesdites au moins deux ouvertures sont aptes à transmettre ou recevoir des composantes de fréquence qui sont différentes à chacune desdites au moins deux ouvertures.

4. Un système selon la revendication 2 ou la revendication 3, caractérisé en ce que l'on réalise une différence de phase choisie au hasard dans lesdites composantes de fréquence entre lesdites au moins deux ouvertures.

5. Un système selon une revendication précédente quelconque, caractérisé en ce que lesdits composantes de fréquence sont aptes à varier en fonction du temps.

6. Un système selon une revendication précédente quelconque, caractérisé en ce que chacune desdites ouvertures (31, 32) est apte à un rayonnement directionnel selon une direction principale de faisceau, les directions principales de faisceau des ouvertures (31, 32) étant parallèles l'une à l'autre et dirigées dans le même sens, et les ouvertures (91 à 99) étant situées selon un déplacement mutuel dans la direction principale de faisceau (90A).

7. Un système selon une revendication précédente quelconque, caractérisé en ce que la distance mutuelle entre les ouvertures (91 à 99) est apte à varier en fonction du temps.

8. Un système selon la revendication 7, caractérisé en ce que ladite variation est accomplie par commutation électronique (100) entre un nombre d'ouvertures (91 à 99).

9. Un système selon une revendication précédente quelconque, caractérisé en ce que deux ouvertures au moins sont montées chacune sur une plate-forme séparée qui est mécaniquement indépendante des autres plates-formes.

10. Un système selon une revendication précédente quelconque, caractérisé en ce que l'une des ouvertures au moins est montée sur une plate-forme mobile, plate-forme (90) qui comporte des moyens inertiels (101) de référence pour stabiliser l'ouverture ou les ouvertures (91 à 99).

11. Un système selon la revendication 8 ou la revendication 9, caractérisé par des moyens de compensation (102) pour le déplacement de la plate-forme (90), basés sur un décalage de phase des signaux, pour établir une configuration d'ondes en interférence stationnaire locale et limitée dans le temps.

12. Un système selon une revendication précédente quelconque, caractérisé en ce que lesdites ondes transmises possèdent un nombre réglé de signatures caractéristiques adaptées chacune à une première caractéristique déterminée au préalable d'un objet individuel.

13. Un système selon une revendication précédente quelconque, caractérisé en ce que le traitement de signaux dans lesdits moyens de réception comprend un traitement Doppler (4) pour déterminer les mouvements d'un objet par rapport à la configuration d'interférence formée (Figure 1, 7).

14. Un système selon une revendication précédente quelconque, caractérisé en ce que les filtres adaptables de signaux sont utilisés dans lesdits moyens de réception pour engendrer un signal Doppler pour chaque composante multifréquence des ondes transmises, en ce que lesdits signaux Doppler engendrés sont normalisés par rapport à la puissance pour former un signal Doppler normalisé, complexe, pour chaque composante multifréquence, en ce que ces composantes de signaux Doppler sont traitées par paires par extension (81, 82) de l'axe des temps ou de l'axe de fréquences de la composante dont la fréquence est la plus élevée dans chaque paire et/ou par compression de l'axe de temps ou de l'axe de fréquences pour la composante dont la fréquence est la plus basse dans chaque paire, pour amener ces composantes à la même fréquence, ladite extension et/ou ladite compression étant effectuées avec un facteur qui dépend de ce qui doit être détecté, et en ce que les deux composantes de signaux dans chaque paire après ledit traitement de paires, sont corrélées (83).

15. Un système selon la revendication 14, destiné à la détection d'objets sous-marins en mouvement qui engendrent les ondes internes dans une masse d'eau avec une modification résultante d'une configuration d'ondes de surface de l'eau, caractérisé en ce que ladite extension et/ou ladite compression de l'axe du temps ou de l'axe de fréquences est effectuée avec un facteur donné par la relation de dispersion pour des ondes internes au profil de densité concerné dans la masse d'eau.

Fig.1

Fig.2

Fig.4

**Fig.3A**

**Fig.3B**

Bearing scan

Antenna 2 (32)

Antenna 1 (31)

Scanning period 1

Time axis 1

2A Radian sweep

$\sim \Delta K_{mean}$

**Fig.5A**

**Fig.5B**

Antenna pattern 56

Target position
$T_{pos} = \frac{\lambda R}{VX}$

Target size
$T_s = \frac{\lambda R}{V \Delta X}$

3

Fig.6

Fig.7

4

Fig.8

Fig.9